# DEMANDE DE BREVET EUROPEEN

(11) **EP 4 844 445 A1**
(43) Date de publication de la demande: **25.11.2026**
(21) Numéro de dépôt: 26179561.1
(22) Date de dépôt: 19.05.2026
(51) Int. Cl.: G01S 13/88

(54) **METHODE D'IMAGERIE GEORADAR A RESOLUTION AUGMENTEE**

(30) Priorité: 23.05.2025 FR 2505534
(71) Demandeur: Commissariat à l'Energie Atomique et aux Energies Alternatives, 75015 Paris (FR)
(72) Inventeur: DORÉ, Jean-Baptiste, 38054 GRENOBLE (FR); D'ERRICO, Raffaele, 38054 GRENOBLE (FR)
(74) Mandataire: Atout PI Laplace

(57) **Abrégé**

Méthode d'imagerie mise en œuvre par un géoradar équipé de plusieurs antennes et comprenant les étapes de :
- Réaliser (201) au moins une mesure sur une zone donnée à l'aide du géoradar,
- Générer (202), à partir de l'au moins une mesure, une image de la zone dans laquelle chaque point de l'image correspond à une estimée d'un coefficient de rétrodiffusion globale,
- Pour chaque vecteur extrait de l'image selon une première dimension de l'image,
i. Appliquer (203) une transformée en fréquence audit vecteur,
ii. Appliquer (204) un algorithme d'estimation de fréquences paramétrique audit vecteur transformé pour déterminer un pseudo-spectre non bruité,
iii. Rechercher (205) au moins un maximum local du pseudo-spectre,
iv. Déterminer (206) une reconstruction du vecteur à partir de l'au moins un maximum local,
v. Appliquer (207) une transformée en fréquence inverse au vecteur reconstruit,

- Concaténer (208) les vecteurs reconstruits pour obtenir une première image reconstruite.

## Description

L'invention concerne le domaine des géoradars ou radars à pénétration de sol et porte sur une méthode d'imagerie à l'aide d'un tel radar.

L'imagerie par géoradar est une technique non destructive utilisée notamment pour explorer le sous-sol et détecter des objets ou des structures enfouies. Elle repose sur l'émission d'ondes électromagnétiques dans le sol et l'analyse des ondes réfléchies par les différentes interfaces souterraines. Les applications de cette technique sont variées, allant de l'archéologie à l'ingénierie civile, en passant par la détection de réseaux enterrés et l'étude des sols.

Plus précisément, l'invention concerne une méthode d'imagerie à résolution augmentée et à rapport signal sur bruit augmenté pour mieux discriminer les cibles que l'on souhaite détecter.

Les géoradars à antennes multiples sont capables de réaliser une imagerie d'une zone, notamment par le biais de techniques de traitement de signal MIMO (Multiple Input Multiple Output). Le brevet français FR3124607 décrit notamment une technique d'imagerie au moyen d'un géoradar à antennes multiples qui vise à générer une image d'une zone dont chaque pixel est constitué d'un coefficient de rétrodiffusion globale.

Cependant, les méthodes actuelles d'imagerie par géoradar et la méthode précitée en particulier présentent certaines limitations. Notamment, la résolution des images obtenues peut être insuffisante pour détecter des objets de petite taille ou pour distinguer des structures proches les unes des autres. De plus, la présence de bruits et d'artefacts dans les données peut compliquer l'interprétation des résultats.

Le document [1] décrit une méthode d'estimation de fréquences paramétrique appelée MUSIC (« Multiple Signal Classification ») qui a pour but de séparer des sources très proches les unes des autres avec une précision supérieure aux méthodes classiques basées sur une transformée de Fourier. Cette méthode est habituellement appliquée à des signaux bruts mesurés par un dispositif radiofréquences.

Le document [2] décrit une méthode de haute résolution pour l'imagerie géoradar qui utilise des techniques de migration pour générer des images qui sont ensuite traitées par analyse spectrale pour améliorer leur résolution.

De manière générale, les méthodes précitées sont appliquées aux images générées au moyen de techniques de migration.

L'invention vise à proposer une solution alternative aux méthodes de l'art antérieur qui permet d'améliorer la résolution d'une image générée par un géoradar et de supprimer le bruit et les artefacts.

La méthode proposée est basée sur la génération d'une image au moyen de la méthode décrite dans le brevet FR3124607 puis en l'application d'une méthode de reconstruction de signal à résolution augmentée pour chaque ligne et/ou chaque colonne de l'image.

La méthode proposée permet d'améliorer la détection de sources proches, de réduire le bruit de sorte à faciliter l'interprétation des résultats par l'analyse des images produites.

L'invention a pour objet une méthode d'imagerie mise en œuvre par un géoradar équipé de plusieurs antennes et comprenant les étapes de :
- Réaliser au moins une mesure sur une zone donnée à l'aide du géoradar,
- Générer, à partir de l'au moins une mesure, une image de la zone dans laquelle chaque point de l'image correspond à une estimée d'un coefficient de rétrodiffusion globale,
- Pour chaque vecteur extrait de l'image selon une première dimension de l'image,
   i. Appliquer une transformée en fréquence audit vecteur,
   ii. Appliquer un algorithme d'estimation de fréquences paramétrique audit vecteur transformé pour déterminer un pseudo-spectre non bruité,
   iii. Rechercher au moins un maximum local du pseudo-spectre,
   iv. Déterminer une reconstruction du vecteur à partir de l'au moins un maximum local,
   v. Appliquer une transformée en fréquence inverse au vecteur reconstruit,
- Concaténer les vecteurs reconstruits pour obtenir une première image reconstruite.

Selon une variante de réalisation, la méthode selon l'invention comprend en outre les étapes de, pour chaque vecteur extrait de l'image reconstruite selon une seconde dimension de l'image :
i. Appliquer une transformée en fréquence audit vecteur,
ii. Appliquer l'algorithme d'estimation de fréquences paramétrique audit vecteur transformé pour déterminer un pseudo-spectre non bruité,
iii. Rechercher au moins un maximum local du pseudo-spectre,
iv. Déterminer une reconstruction du vecteur à partir de l'au moins un maximum local,
v. Appliquer une transformée en fréquence inverse au vecteur reconstruit,
   - Concaténer les vecteurs reconstruits pour obtenir une seconde image reconstruite.

Selon un aspect particulier de l'invention, l'algorithme d'estimation de fréquences paramétrique est l'algorithme MUSIC.

Selon un aspect particulier de l'invention, l'étape de déterminer une reconstruction du vecteur à partir de l'au moins un maximum local comprend les sous-étapes de :
- Appliquer une régression linéaire à la transformée en fréquence du vecteur pour déterminer les coefficients associés aux maxima locaux,
- Reconstruire le vecteur comme une combinaison linéaire de signaux élémentaires de fréquences associées aux maxima locaux pondérées par lesdits coefficients

Selon un aspect particulier de l'invention, l'algorithme d'estimation de fréquences paramétrique est un algorithme de super-résolution et le pseudo-spectre est déterminé à une résolution supérieure à celle du vecteur.

Selon un aspect particulier de l'invention, la première image reconstruite et/ou la seconde image reconstruite sont déterminées à une résolution supérieure à l'image de la zone.

L'invention a aussi pour objet un géoradar comprenant au moins une antenne d'émission et au moins une antenne de réception et un dispositif d'imagerie configuré pour exécuter les étapes de la méthode d'imagerie selon l'invention.

L'invention a aussi pour objet un programme d'ordinateur comportant des instructions pour l'exécution de la méthode selon l'invention, lorsque le programme est exécuté par un processeur.

L'invention a aussi pour objet un support d'enregistrement lisible par un processeur sur lequel est enregistré un programme comportant des instructions pour l'exécution de la méthode selon l'invention, lorsque le programme est exécuté par un processeur.

D'autres caractéristiques et avantages de la présente invention apparaîtront mieux à la lecture de la description qui suit en relation aux dessins annexés suivants.
[Fig. 1a] illustre une configuration de détection de deux objets proches au moyen d'un géoradar,
[Fig. 1b] représente une image obtenue pour la configuration de la figure 1a selon une méthode de l'art antérieur,
[Fig. 2] représente un organigramme détaillant les étapes de mise en œuvre d'une méthode d'imagerie selon un premier mode de réalisation de l'invention,
[Fig. 3] représente un organigramme détaillant les étapes de mise en œuvre d'une méthode d'imagerie selon un second mode de réalisation de l'invention,
[Fig. 4] représente un schéma d'un dispositif géoradar selon un mode de réalisation de l'invention,
[Fig. 5] représente un exemple de résultats d'imagerie obtenus via l'invention.

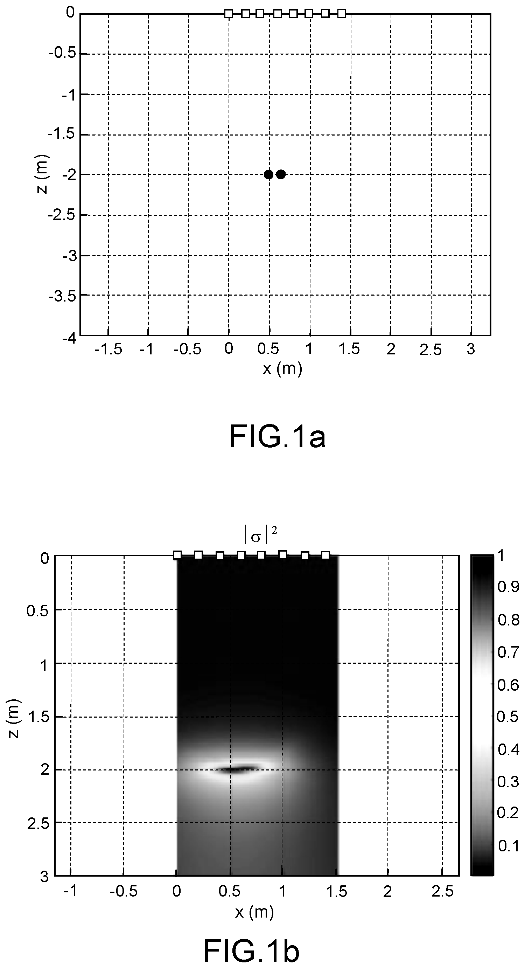

La figure 1a illustre schématiquement une configuration d'un géoradar à huit antennes disposé à la surface du sol (z=0) pour imager une zone du sol comprenant deux objets proches situés à une profondeur z=2m.

La figure 1b représente une image radar obtenue à l'aide de la méthode d'imagerie décrite dans le brevet FR3124607. La résolution de l'image ne permet pas de séparer clairement les deux objets dont les échos sont fusionnés sur l'image.

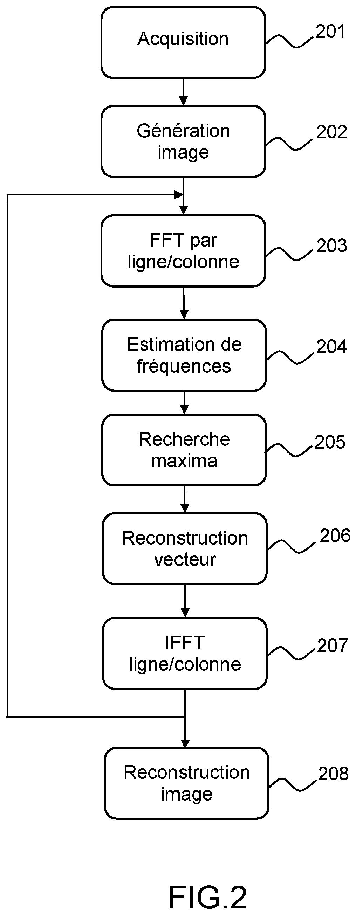

La figure 2 représente un organigramme détaillant les étapes de mise en œuvre d'une méthode d'imagerie selon un mode de réalisation de l'invention.

La méthode débute à l'étape 201 avec l'acquisition de signaux radars au moyen d'un géoradar muni de plusieurs antennes d'émission et de réception. Le radar se déplace sur la zone à imager afin de réaliser plusieurs acquisitions successives.

A l'étape 202, on génère une image de la zone à partir des signaux radar mesurés. Chaque point de l'image radar présente une intensité caractéristique de la réflexion des signaux sur une cible. L'étape 202 est par exemple réalisée au moyen de la méthode d'imagerie décrite dans le brevet FR3124607.

Les étapes suivantes de la méthode sont appliquées à chaque ligne ou à chaque colonne de l'image qui correspond donc à un vecteur.

A l'étape 203, on applique une transformée de Fourier au vecteur afin de convertir les données dans le domaine fréquentiel de sorte à extraire les composantes spectrales du signal contenu dans l'image.

A l'étape 204, on applique au vecteur un algorithme d'estimation de fréquences paramétriques, par exemple l'algorithme MUSIC de sorte à obtenir un spectre qui comprend uniquement le signal utile représenté par ses composantes spectrales principales et dans lequel le bruit est éliminé.

Un exemple de réalisation de l'étape 204 est à présent décrit.

On note h le vecteur obtenu après transformée de Fourier, composé de K valeurs complexes.

On construit tout d'abord une matrice de Hankel H à partir du signal h de la façon suivante
$H = \left[\begin{matrix}{h}_{1} & {h}_{2} & {h}_{3} & ⋯ & {h}_{L} \\ {h}_{2} & {h}_{3} & {h}_{4} & ⋯ & {h}_{L + 1} \\ {h}_{3} & {h}_{4} & {h}_{5} & ⋯ & {h}_{L + 2} \\ ⋮ & ⋮ & ⋮ & ⋱ & ⋮ \\ {h}_{L} & {h}_{L + 1} & {h}_{L + 2} & ⋯ & {h}_{2 L - 1} \\ {h}_{L + 1} & {h}_{L + 2} & {h}_{L + 3} & ⋯ & {h}_{2 L}\end{matrix}\right]$ (1)

La dimension L de la matrice de Hankel H est par exemple prise égale à L=K/2. Chaque élément H_{i,k} est défini par H_{i,k}=hᵢ₊ⱼ₋₁.

Ensuite on applique une décomposition en valeurs singulières à la matrice H. Cette décomposition permet de séparer le signal en ses composantes principales : H=USV^{H}.

U est la matrice orthogonale des vecteurs singuliers, S est une matrice diagonale des valeurs singulières et V^{H} est la matrice transposée conjuguée des vecteurs singuliers.

Ensuite, on extrait les vecteurs U₂ de la matrice U, qui correspondent aux composantes associées au bruit. Si on note N le nombre de valeurs singulières, les vecteurs U₂ correspondent aux composantes N+1 à L de la matrice U.

On calcule enfin le spectre G comprenant les fréquences dominantes du signal au moyen des relations suivantes.

F est une matrice exponentielle qui est fonction des indices de fréquence f et des indices de délais D=[0...K-1] $F = exp \left(-j2π\frac{{D}^{t} ⋅ f}{K}\right) .$ (2)

Les indices de fréquence f sont pris tels que f=[0...K'] avec K'=M.K, M est le facteur de résolution souhaité. Si M=2, la résolution en fréquence du spectre G est deux fois supérieure à celle du vecteur h. Selon un mode de réalisation de l'invention, M est pris égal à 1, dans ce cas, la résolution de l'image n'est pas augmentée mais la méthode permet déjà de supprimer le bruit et les artefacts présents dans l'image.

Le spectre G est obtenu à partir de la matrice F via la relation suivante :
$G \left(i\right) = 10 {log}_{10} \left(\frac{\sum {\left|{F}^{H}\left(1:L,i\right)\right|}^{2}}{\sum {\left|{U}_{2}^{H}F\left(1:L,i\right)\right|}^{2}}\right) , i ϵ \left[1 … K′\right]$ (3)

La personne du métier peut se référer au document [3] pour plus de détails ou d'alternatives pour déterminer l'estimation spectrale G à partir du vecteur h via l'algorithme MUSIC.

A l'étape 205, on recherche ensuite les N maxima locaux du spectre G. Ces N maxima locaux correspondent aux différentes fréquences associées aux délais prépondérants dans le signal. Le nombre N correspond également au nombre de valeurs singulières.

N est un entier au moins égal à 1 et est un paramètre de la méthode.

Dans un mode de réalisation de l'invention, N est pris égal à 1, dans ce cas un seul maximum local du spectre G est recherché correspondant à une seule valeur singulière.

A l'étape 206, on reconstruit ensuite une nouvelle version hᵣ du vecteur h à partir du ou des maxima locaux obtenus.

Si on note Pos(i) la position de chaque maxima dans le spectre G(i), on construit les vecteurs associés B_{B} :
${B}_{B} \left(l, i\right) = exp \left(-j2π\frac{l - 1}{K ′}.Pos\left(i\right)\right) , l ϵ \left[1 … K′\right] , i ϵ \left[1 … N\right]$ (4)

Ces vecteurs sont ensuite utilisés pour estimer les coefficients associés à chaque délai à l'aide de la matrice pseudo-inverse de la matrice ${B}_{B}^{H} {B}_{B}$. Cette étape d'estimation est réalisée par régression linéaire via la relation (5) :
$\hat{s} = {\left({B}_{B}^{H}{B}_{B}\right)}^{- 1} {B}_{B}^{H} h$ (5)

Enfin, le signal est reconstruit en sommant l'ensemble des contributions :
${h}_{r} \left(l\right) = {\sum }_{i = 1}^{N} {\hat{s}}_{i} {e}^{- j 2 π \frac{l - 1}{K ′} . Pos \left(i\right)} , l ϵ \left[1 … K′\right]$ (6)

On applique ensuite une transformée de Fourier inverse 207 au vecteur hᵣ pour obtenir un signal reconstruit correspondant à une ligne ou à une colonne de l'image.

Les étapes 203 à 207 sont itérées pour chaque ligne ou chaque colonne de l'image d'origine. A l'étape 208, on concatène l'ensemble des vecteurs reconstruits pour former une image reconstruite.

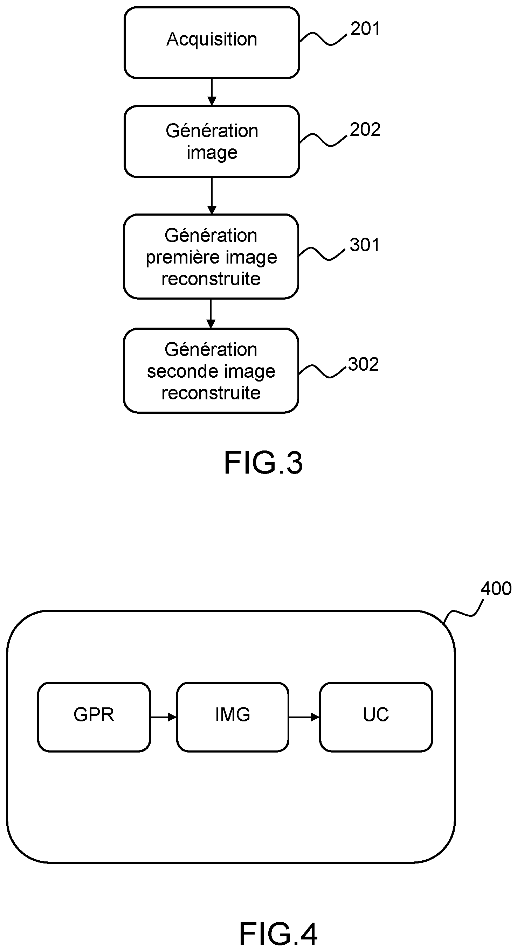

La figure 3 illustre un second mode de réalisation de l'invention dans lequel on applique une première fois la méthode décrite à la figure 2 pour générer (étape 301) une première image reconstruite, par exemple en reconstruisant chaque ligne de l'image d'origine. Ensuite (étape 302), on applique une seconde fois la méthode décrite à la figure 2 sur la première image reconstruite en traitant cette fois l'autre dimension de l'image (les colonnes dans cet exemple) de sorte à générer une seconde image reconstruite.

Le mode de réalisation de la figure 3 permet d'améliorer encore la résolution ou la netteté de l'image dans les deux dimensions.

La figure 4 schématise un dispositif de détection radar selon l'invention. Le dispositif 400 comporte un module d'acquisition de signaux radar GPR, un module d'imagerie IMG permettant de générer des images radar d'une zone du sol à partir des signaux radar acquis par le module GPR et une unité de calcul UC configurée pour mettre en œuvre les étapes de la méthode de reconstruction d'image selon l'un quelconque des modes de réalisation de l'invention.

Les modules IMG,UC peuvent être réalisés sous forme logicielle et/ou matérielle notamment en utilisant un ou plusieurs processeur(s) et une ou plusieurs mémoire(s). Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »).

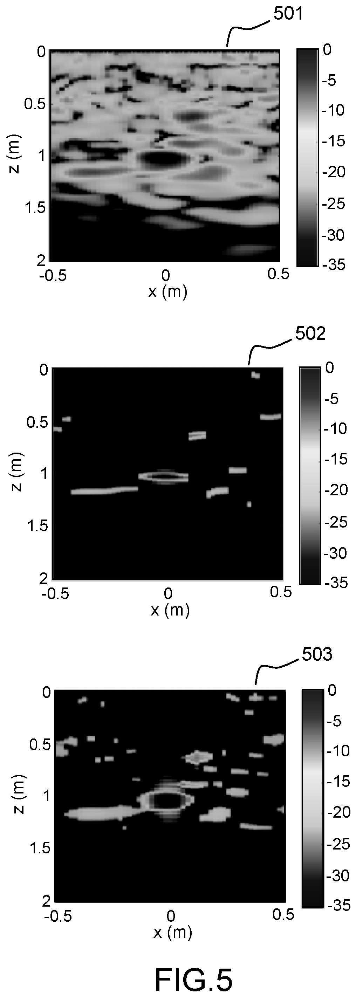

La figure 5 montre un exemple de résultats obtenus par application de l'invention sur des mesures.

L'image 501 correspond à une image générée à partir de signaux radars, par exemple via la méthode décrite dans le brevet FR3124607. On peut identifier la présence d'artefacts et de bruit dans l'image.

L'image 502 correspond à une application de la méthode de la figure 2 sur les lignes de l'image 501 et en fixant N=1 le nombre de maxima recherchés. On peut voir que le bruit est fortement supprimé et que la résolution sur la cible centrale est améliorée.

L'image 503 correspond à une application de la méthode de la figure 2 sur les lignes de l'image 501 et en fixant N=4 le nombre de maxima recherchés.

L'amélioration de la précision de détection de cibles sur l'image résulte d'un compromis entre le nombre de cibles à rechercher N et la résolution de chaque cible sur l'image.

Bien que l'invention ait été décrite dans le contexte de l'imagerie d'une zone du sol comprenant un ou plusieurs objets enterrés, elle s'applique à l'identique à l'imagerie de tout autre type de matériau dans lequel sont localisées des cibles à détecter. Par exemple, l'invention s'applique dans le domaine médical pour l'imagerie de tissus biologiques.

### Références

[1] Schmidt, R.O, "Multiple Emitter Location and Signal Parameter Estimation," IEEE Trans. Antennas Propagation, Vol. AP-34 (March 1986), pp. 276-280.
[2] Pamela Manase. Techniques de haute résolution pour l'imagerie GPR en champ proche et à large bande. Université de Rennes, 2023. https://theses.hal.science/tel-04383372
[3] Wenjing Liao et al, « MUSIC for single-snapshot spectral estimation : stability and super-resolution », 23/09/2014

## Revendications

1. Méthode d'imagerie mise en œuvre par un géoradar équipé de plusieurs antennes et comprenant les étapes de :
- Réaliser (201) au moins une mesure sur une zone donnée à l'aide du géoradar,
- Générer (202), à partir de l'au moins une mesure, une image de la zone dans laquelle chaque point de l'image correspond à une estimée d'un coefficient de rétrodiffusion globale,
- Pour chaque vecteur extrait de l'image selon une première dimension de l'image,
i. Appliquer (203) une transformée en fréquence audit vecteur,
ii. Appliquer (204) un algorithme d'estimation de fréquences paramétrique audit vecteur transformé pour déterminer un pseudo-spectre non bruité,
iii. Rechercher (205) au moins un maximum local du pseudo-spectre,
iv. Déterminer (206) une reconstruction du vecteur à partir de l'au moins un maximum local,
v. Appliquer (207) une transformée en fréquence inverse au vecteur reconstruit,
- Concaténer (208) les vecteurs reconstruits pour obtenir une première image reconstruite.

2. Méthode d'imagerie selon la revendication 1 comprenant en outre les étapes de, pour chaque vecteur extrait de l'image reconstruite selon une seconde dimension de l'image :
- Appliquer une transformée en fréquence audit vecteur,
- Appliquer l'algorithme d'estimation de fréquences paramétrique audit vecteur transformé pour déterminer un pseudo-spectre non bruité,
- Rechercher au moins un maximum local du pseudo-spectre,
- Déterminer une reconstruction du vecteur à partir de l'au moins un maximum local,
- Appliquer une transformée en fréquence inverse au vecteur reconstruit,
- Concaténer les vecteurs reconstruits pour obtenir une seconde image reconstruite.

3. Méthode d'imagerie selon l'une quelconque des revendications précédentes dans laquelle l'algorithme d'estimation de fréquences paramétrique (204) est l'algorithme MUSIC.

4. Méthode d'imagerie selon l'une quelconque des revendications précédentes dans laquelle l'étape de déterminer (206) une reconstruction du vecteur à partir de l'au moins un maximum local comprend les sous-étapes de :
- Appliquer une régression linéaire à la transformée en fréquence du vecteur pour déterminer les coefficients associés aux maxima locaux,
- Reconstruire le vecteur comme une combinaison linéaire de signaux élémentaires de fréquences associées aux maxima locaux pondérées par lesdits coefficients

5. Méthode d'imagerie selon l'une quelconque des revendications précédentes dans laquelle l'algorithme d'estimation de fréquences paramétrique est un algorithme de super-résolution et le pseudo-spectre est déterminé à une résolution supérieure à celle du vecteur.

6. Méthode d'imagerie selon la revendication 5 dans laquelle la première image reconstruite et/ou la seconde image reconstruite sont déterminées à une résolution supérieure à l'image de la zone.

7. Géoradar (400) comprenant au moins une antenne d'émission et au moins une antenne de réception et un dispositif d'imagerie configuré pour exécuter les étapes de la méthode d'imagerie selon l'une quelconque des revendications précédentes.

8. Programme d'ordinateur comportant des instructions pour l'exécution de la méthode selon l'une quelconque des revendications 1 à 6, lorsque le programme est exécuté par un processeur.

9. Support d'enregistrement lisible par un processeur sur lequel est enregistré un programme comportant des instructions pour l'exécution de la méthode selon l'une quelconque des revendications 1 à 6, lorsque le programme est exécuté par un processeur.
